# EUROPEAN PATENT APPLICATION

(11) **EP 2 698 345 A1**
(43) Date of publication of application: **19.02.2014**
(21) Application number: 12180402.5
(22) Date of filing: 14.08.2012
(51) Int. Cl.: C01B 25/37, H01M 4/525

(54) **Mixed sulphate containing lithium-iron phosphate**

(71) Applicant: Clariant International Ltd., 4132 Muttenz 1 (CH)
(72) Inventor: Tran, Nicolas, 85405 Nandlstadt (DE); Nuspl, Gerhard, 81543 München (DE)
(74) Representative: Stolmár & Partner

(57) **Abstract**

The present invention relates to a sulphate containing mixed lithium-iron phosphate of formula

LiₓFe_{1-y}M_{y}(PO₄)ᵤ(SO₄)ᵥ

wherein M is a metal selected from the group Co, Ni, Mn, Al, Mg, Sn, Pb, Nb B, Cu, Cr, Mo, Ru, V, Ga, Ca, Sr, Ba, Ti, Zr, Cd and mixtures thereof and wherein 0.9 ≤ x ≤ 1.5, 0 ≤ y ≤ 0.5 and 0 < u ≤ 1,0 and 0 < v ≤ 0,25, a process for its manufacture as well as its use as active cathode material in a secondary lithium-ion battery.

## Description

The present invention relates to a novel sulphate containing lithium-iron phosphate, a process for producing it as well as its use as cathode material in a secondary lithium-ion battery.

Since the publications by Goodenough et al. (J. Electrochem. Soc., 144, 1188-1194, 1997) there has been significant interest in particular in using lithium iron phosphate as cathode material in rechargeable secondary lithium-ion batteries. Lithium iron phosphate, compared with conventional lithium compounds based on spinels or layered oxides, such as lithium manganese oxide, lithium cobalt oxide and lithium nickel oxide, offers higher safety properties in the delithiated state such as are required in particular for the use of batteries in future in electric cars, electrically powered tools etc.

Pure lithium iron phosphate material was improved by so-called "carbon coating" (N. Ravet et al., Meeting of Electrochemical Society, Honolulu, 17 - 31 October 1999, EP 1 084 182 B1), as an increased capacity and power capability of the carbon-coated material are achieved at room temperature (160 mAH/g).

In addition to customary solid-state syntheses (US 5,910,382 C1 or US 6,514,640 C1), a hydrothermal synthesis for lithium iron phosphate with the possibility of controlling the size and morphology of the lithium iron phosphate particles was disclosed in WO 2005/051840.

Numerous publications relate to the electrochemical properties of doped and undoped lithium iron and lithium transition metal phosphates, for example:
Herle et al. in Nature Materials, Vol. 3, pp. 147-151 (2004) describe lithium-iron and lithium-nickel phosphates doped with zirconium. Morgan et al. describes in Electrochem. Solid State Lett. 7 (2), A30-A32 (2004) the intrinsic lithium-ion conductivity in LiₓMPO₄ (M = Mn, Fe, Co, Ni) olivines. Yamada et al. in Chem. Mater. 18, pp. 804-813, 2004 deal with the electrochemical, magnetic and structural features of Liₓ(Mn_{y}Fe_{1-y})PO₄, which are also disclosed e.g. in W02009/009758.
Structural variations of Liₓ(Mn_{y}Fe_{1-y})PO₄, i.e. of the lithiophilite-triphylite series, were described by Losey et al. The Canadian Mineralogist, Vol. 42, pp. 1105-1115 (2004).

However, synthesis of these compounds especially via wet chemistry methods or hydrothermal methods yields materials with large primary particles and a lithium deficiency causing a negative impact such as a relatively low capacity of the related lithium cells.

Further, it is known that an increase in lithium hydroxide concentration (excess of total lithium)in the wet chemistry route (lithium hydroxide being usually the preferred lithium source) yields LiMPO₄ compounds having significant amounts of Li₃PO₄ impurities (Chem. Mater. 2009, 21, 1636-1644).

Usually a Li/ M /P ratio of 3 / 1 / 1 is adopted for wet syntheses of electroactive LiFePO₄. Even with a slight Li deficit x i.e. with a Li/ M /P ratio of 3-x / 1 / 1, sub-stoichiometric Li₁₋₂ₓFeₓFePO₄ compounds are obtained having a low specific capacity (Chem. Mater. 2009, 21, 1636-1644).

The object of the present invention was therefore to provide suitable impurity free and stoichiometric lithium-iron-phosphates used as cathode material and to avoid a large lithium deficiency in the stoichiometry.

This objective is achieved by a sulphate containing mixed lithium-iron phosphate of formula

LiₓFe_{1-y}M_{y}(PO₄)ᵤ(SO₄)ᵥ

wherein
M is a metal selected from the group consisting of Co, Ni, Mn, Al, Mg, Sn, Pb, Nb B, Cu, Cr, Mo, Ru, V, Ga, Ca, Sr, Ba, Ti, Zr, Cd and mixtures thereof
and wherein:
0.9 ≤ x ≤ 1.5, 0 ≤ y ≤ 0.5, 0 < u ≤ 1.0 and 0 < v ≤ 0.25.

Surprisingly it was found that the sulphate containing mixed lithium iron phosphate according to the invention has a higher specific capacity than a sulphate free lithium iron phosphate and has a very low lithium deficiency if at all as well as a small primary particle size.

The increase in specific capacity is in the range of about 5 to 15 % compared to prior art materials synthesized by a wet route. The total sulphur content as measured by ICP is in the range between 0.01 and 0.16 wt% based on the total material weight. The obtained material according to the invention has a controlled stoichiometry and even a small Li deficiency can be controlled and regulated according to the derived specific electronic properties of the material.

The lithium-iron phosphate according to the invention may be doped or non-doped.

The term "a or the lithium-iron phosphate" means within the scope of this invention therefore both a doped or non-doped lithium iron phosphate.

"Non-doped" means pure, in particular phase-pure lithium iron phosphate having the formula
LiₓFe(PO₄)ᵤ(SO₄)ᵥ wherein x, u and v have the same meanings as above.

A "doped" lithium iron phosphate or lithium iron metal phosphate means a compound of the formula LiₓFe_{1-y}M_{y}(PO₄)ᵤ(SO₄)ᵥ wherein x, y, u and v have the same meanings as above and wherein an additional metal M is present.

As recited above M may be selected from the group consisting of Co, Ni, Al, Mg, Sn, Pb, Nb ,B, Cu, Cr, Mo, Ru, V, Ga, Ca, Sr, Ba, Ti, Zr, Cd, Mn and mixtures thereof. Preferably M represents Co, Mg, Nb, Ni, Al, Zn, Ca and mixtures thereof and y has a value of ≤ 0.5 and ≥ 0.001.

Exemplary non limiting stoichiometric formulae are LiₓFe_{1-y}Mg_{y}(PO₄)ᵤ(SO₄)ᵥ, LiₓFe_{1-y}Nb_{y}(PO₄)ᵤ(SO₄)ᵥ, LiₓFe_{1-y}CO_{y}(PO₄)ᵤ(SO₄)ᵥ , LiₓFe_{1-y}Zn_{y}(PO₄)ᵤ(SO₄)ᵥ, LiₓFe_{1-y}Al_{y}(PO₄)ᵤ(SO₄)ᵥ , LiₓFe_{1-y}(Zn,Mg)_{y}(PO₄)ᵤ(SO₄)ᵥ with x, y, z and v having the same meanings as recited above with the values for y as defined in the foregoing paragraph.

In other embodiments of the invention, the metal M is Zn, Mg, Ca, Al or combinations thereof, in particular Mg and/or Zn.

It was found that for compounds according to the invention such as Li_{0.90}Fe_{0.90}Zn_{0.10}(PO₄)(SO₄)_{0.01}, Li_{0.95}Fe_{0.90}Mg_{0.10}(PO₄)(SO₄)_{0.01}, Li_{0.99}Fe_{0.90}Zn_{0.10}(PO₄)(SO₄)_{0.006}, Li_{0.98}Fe_{0.90}Mg_{0.10}(PO₄)(SO₄)_{0.006},Li_{0.95}Fe_{0.93}Zn_{0.07}(PO₄)(SO₄)_{0.01} and LiFe_{0.90}Zn_{0.10}(PO₄)(SO₄)_{0.06} the specific capacity is higher than for Li_{0.80}Fe_{0.90}Zn_{0.10}PO₄ or Li_{0.80}Fe_{0.90}Mg_{0.10}PO₄ or Li_{0.99}Fe_{0.90}Zn_{0.10}(PO₄) which means an increase in energy density for the battery.

In further embodiments of the invention, the atomic ratio Li/Σ_{Fe + M} is in the range of between 0.9 to 1.5. It has been found that mixed sulphate containing lithium iron phosphates satisfying this requirement provide an especially high capacity. In further embodiments this value is in the range of 0.9 to 1.2.

In further embodiments of the present invention, the sulphate containing lithium-iron phosphate additionally comprises carbon. The carbon is preferably evenly distributed throughout the substituted lithium iron metal phosphate. In other words, the carbon forms a type of matrix in which the lithium- iron metal phosphate according to the invention is embedded. It makes no difference for the meaning of the term "matrix" used here whether e.g. the carbon particles serve as "nucleation sites" for the LiₓFe_{1-y}M_{y}(PO₄)ᵤ(SO₄)ᵥ according to the invention, i.e. whether these nucleate on the carbon, or whether, as in a particularly preferred development of the present invention, the individual particles of the lithium-iron metal phosphate LiₓFe_{1-y}M_{y}(PO₄)ᵤ(SO₄)ᵥ are covered in carbon, i.e. sheathed or in other words at least partially coated. Both variants are considered as equivalent according to the invention and fall under the above definition.

Important for the purpose of the present invention is merely that the carbon is evenly distributed in the sulphate containing lithium-iron phosphate LiₓFe_{1-y}M_{y}(PO₄)(SO₄)ᵥ according to the invention and forms a type of (three-dimensional) matrix. In embodiments of the present invention, the presence of carbon or a carbon matrix may make obsolete the further addition of electrically conductive additives such as e.g. conductive carbon black, graphite etc. when using the LiₓFe_{1-y}M_{y}(PO₄)ᵤ(SO₄)ᵥ according to the invention as electrode material.

In a further embodiment of the invention, the proportion of carbon relative to the sulphate containing lithium- iron phosphate is ≤ wt.-%, in further embodiments ≤ 2.5 wt.-%, in still further embodiments ≤ 2.2 wt.-% and in still further embodiments ≤ 2.0 wt.-%. Thus the best energy densities of the material according to the invention are achieved.

A sulphate containing lithium-iron phosphate LiₓFe_{1-y}M_{y}(PO₄)ᵤ(SO₄)ᵥ according to the invention is preferably contained as active material in a cathode for a secondary lithium-ion battery. As stated, this cathode can also contain a sulphate containing lithium-iron phosphate according to the invention without further addition of a further conductive material such as e.g. conductive carbon black, acetylene black, Ketjen black, graphite etc. (in other words is free of added conductive agent), both in the case of the carbon-containing LiₓFe_{1-y}M_{y}(PO₄)ᵤ(SO₄)ᵥ according to the invention and the carbon-free LiₓFe_{1-y}M_{y}(PO₄)ᵤ(SO₄)ᵥ.

In further preferred embodiments, the cathode according to the invention contains a further lithium-metal-oxygen compound. This addition increases the energy density by up to approx. 10 - 15%, depending on the type of the further mixed lithium metal compound compared with cathodes which contain only the LiₓFe_{1-y}M_{y}(PO₄)ᵤ(SO₄)ᵥ according to the invention as the sole active material.

The further lithium-metal-oxygen compound is preferably selected from substituted or non-substituted LiCoO₂, LiMn₂O₄, Li₁₊ₓ(Ni,Mn,Co)₁₋ₓO₂, Li(Ni,Co,Al)O₂ and LiNiO₂, as well as Li(Mn,Fe)PO₄, LiFePO₄, LiCoPO₄, LiNiPO₄ and mixtures thereof.

The object of the present invention is further achieved by a process for producing a mixed lithium-iron phosphate according to the invention with the general formula LiₓFe_{1-y}M_{y}(PO₄)ᵤ(SO₄)ᵥ comprising the following steps:
a. providing an aqueous mixture with a pH < 7.5 containing at least one Li starting compound, a Fe starting compound, optionally a M starting compound, a PO₄³⁻ and a SO₄²⁻ starting compound until a precipitate or a suspension in aqueous solution forms,
b. carrying out a dispersion or grinding treatment of the mixture and/or the suspension.
c. obtaining LiₓFe_{1-y}M_{y}(PO₄)ᵤ(SO₄)ᵥ wherein x, y, u and v have the above referenced meanings, from the suspension by reaction under hydrothermal conditions wherein a precipitate forms.

The treatment in step b. is preferably carried out until the D₉₀ value of the particles in the mixture is less than 50 µm, preferably at most 25 µm.

The term "hydrothermal conditions" means for the purpose of the present invention temperatures of 100°C to 200°C, preferably 100°C to 170°C and quite particularly preferably 120°C to 170°C as well as a pressure of 1 bar to 40 bar vapour pressure. In particular, it has surprisingly been shown that the synthesis at the quite particularly preferred temperature of 120 - 170°C, in particular at 160 ± 5°C, leads to an increase in the specific capacity of the thus-obtained LiₓFe_{1-y}M_{y}(PO₄)ᵤ(SO₄)ᵥ according to the invention compared with reaction at more than 160°C ± 5°C.

As stated before, the synthesis takes place in aqueous solution/suspension. At the end of the reaction, the pH of the reaction solution (i.e. after precipitation of the product LiₓFe_{1-y}M_{y}(PO₄) (SO₄)ᵥ) is approx. 5 to 6.5, i.e. the reaction itself takes place in a non-basic environment.

The process according to the invention makes possible in particular the synthesis of phase-pure LiₓFe_{1-y}M_{y}(PO₄)ᵤ(SO₄)ᵥ which is free of impurities as determined by means of XRD And has a higher capacity as a non sulphate containing lithium-iron phosphate.

A further aspect of the present invention is the provision of LiₓFe_{1-y}M_{y}(PO₄)ᵤ(SO₄)ᵥ which can be obtained by the process according to the invention.

In embodiments of the process according to the invention, the dispersion or grinding treatment begins before or during the suspension formation and is continued until the suspension/precipitation is finished.

Preferably, the dispersion or grinding treatment starts before the suspension/precipitation of the mixture in order to bring about an increased nucleation and in order to prevent the formation of large crystals and crystal agglomerates.

After the hydrothermal treatment, the LiₓFe_{1-y}M_{y}(PO₄)ᵤ(SO₄)ᵥ obtained according to the invention is separated off by filtration and/or centrifuging as well as dried and, in preferred embodiments of the invention, disagglomerated, e.g. by grinding with an air-jet mill.

In specific embodiments of the process according to the invention, a carbon-containing material is added during step a) or c). This can be either pure carbon, such as e.g. graphite, acetylene black or Ketjen black, or a carbon-containing precursor compound which then decomposes when exposed to the action of heat to a carbonaceous residue, e.g. starch, gelatine, a polyol, a sugar such as mannose, fructose, sucrose, lactose, galactose, a partially water-soluble polymer such as e.g. a polyacrylate etc.

Alternatively, the LiₓFe_{1-y}M_{y}(PO₄)ᵤ(SO₄)ᵥ obtained after the hydrothermal treatment may also be mixed with a carbon-containing material as defined above or impregnated with an aqueous solution of same. This can take place either directly after the isolation (filtration) of the LiₓFe_{1-y}M_{y}(PO₄)ᵤ(SO₄)ᵥ or after it has been dried or disagglomerated.

For example the mixture of LiₓFe_{1-y}M_{y}(PO₄)ᵤ(SO₄)ᵥ and a carbon precursor compound (which was added e.g. during the process) or the LiₓFe_{1-y}M_{y}(PO₄)ᵤ(SO₄)ᵥ impregnated with the carbon precursor compound is then dried and heated at a temperature between 500°C and 850°C, wherein the carbon precursor compound is pyrolyzed to pure carbon which then wholly or at least partly covers the LiₓFe_{1-y}M_{y}(PO₄)ᵤ(SO₄)ᵥ particles as a layer (coating).

The pyrolysis can be followed by a grinding or disagglomeration treatment but the grinding step is not mandatory.

The LiₓFe_{1-y}M_{y}(PO₄)ᵤ(SO₄)ᵥ obtained according to the invention is preferably dried under protective gas, in air or under vacuum at temperatures of from 50°C to 200°C, preferably under protective gas and the pyrolysis preferably likewise under protective gas, preferably nitrogen.

Within the scope of the process according to the invention, the at least one Li⁺ source, the Fe²⁺ sources as well as the optional M^{y+} source(s) are preferably used in the form of aqueous solutions and the PO₄³⁻ and SO₄²⁻ sources in the form of a liquid, e.g. as H₃PO₄ or H₂SO₄ an aqueous solution or suspension of a solid phosphate and/or sulphate compound.

In preferred embodiments of the process according to the invention, the Li⁺ source is first dissolved in an aqueous solvent, the Fe²⁺ and the M^{y+} sources as well as the PO₄³⁻ and SO₄²⁻ source are then added and mixed under inert gas atmosphere. The reaction then takes place under hydrothermal conditions and preferably under protective gas.

According to the invention, Li₂O, LiCl, LiNO₃, LiOH, Li₂SO₄ or Li₂CO₃, preferably LiOH , Li₂O, Li₂SO₄ or Li₂CO₃, is used as lithium source.

In further embodiments of the invention a second lithium source is used which is different from the first one. Preferably, the second lithium source is Li₂SO₄ providing a cheap and simple source for sulphate.

The Fe source is preferably an Fe²⁺ salt, in particular FeSO₄, FeCl₂, FeNO₃, Fe₃(PO₄)₂ or an Fe organyl salt or an iron carboxylate like iron oxalate, iron citrate, iron acetate etc.

For the preparation of lithium iron metal phosphates, the corresponding metal sulphates, in particular of Mg, Zn and Ca may be used as source for the metal cation M^{y+}.

According to the invention, phosphoric acid, a metal phosphate, hydrogen phosphate or dihydrogen phosphate is preferably used as PO₄³⁻ source.

The invention is explained in more detail below with reference to examples and drawings which are not, however, to be considered as limiting the scope of the invention.

It is shown in:
Figure 1
   The discharge curve at C/10 and at room temperature for a lithium cell containing Li_{0.80}Fe_{0.90}Zn_{0.10}PO₄ in the cathode
Figure 2
   The discharge curve at C/10 and at room temperature for a lithium cell containing Li_{0.78}Fe_{0.90}Mg_{0.10}PO₄ in the cathode
Figure 3
   The discharge curve at C/10 and at room temperature for a lithium cell containing Li_{0.99}Fe_{0.90}Zn_{0.10}PO₄(SO₄)_{0.006} in the cathode
Figure 4
   The discharge curve at C/10 and at room temperature for a lithium cell containing Li_{0.98}Fe_{0.90}Mg_{0.10}PO₄(SO₄)_{0.006} in the cathode

### Examples

### 1. Determination of the particle-size distribution:

The particle-size distributions for the mixtures or suspensions and of the produced material is determined using the light scattering method using commercially available devices. This method is known *per* se to a person skilled in the art, wherein reference is also made in particular to the disclosure in JP 2002-151082 and WO 02/083555. In this case, the particle-size distributions were determined by a laser diffraction measurement apparatus (Mastersizer S, Malvern Instruments GmbH, Herrenberg, DE) and the manufacturer's software (version 2.19) with a Malvern Small Volume Sample Dispersion Unit, DIF 2002 as measuring unit. The following measuring conditions were selected: compressed range; active beam length 2.4 mm; measuring range: 300 RF; 0.05 to 900 µm. The sample preparation and measurement took place according to the manufacturer's instructions.

The D₉₀ value gives the value at which 90% of the particles in the measured sample have a smaller or the same particle diameter. Accordingly, the D₅₀ value and the D₁₀ value give the value at which 50% and 10% respectively of the particles in the measured sample have a smaller or the same particle diameter.

According to a particularly preferred embodiment according to the invention, the values mentioned in the present description are valid for the D₁₀ values, D₅₀ values, the D₉₀ values as well as the difference between the D₉₀ and D₁₀ values relative to the volume proportion of the respective particles in the total volume. Accordingly, the D₁₀, D₅₀ and D₉₀ values mentioned herein give the values at which 10 volume-% and 50 volume-% and 90 volume-% respectively of the particles in the measured sample have a smaller or the same particle diameter. If these values are obtained, particularly advantageous materials are provided according to the invention and negative influences of relatively coarse particles (with relatively larger volume proportion) on the processability and the electrochemical product properties are avoided. Preferably, the values mentioned in the present description are valid for the D₁₀ values, the D₅₀ values, the D₉₀ values as well as the difference between the D₉₀ and the D₁₀ values relative to both percentage and volume percent of the particles.

For compositions (e.g. electrode materials) which, in addition to the lithium- iron phosphates according to the invention are further doped with metal cations, contain further components, in particular for carbon-containing compositions, the above light scattering method can lead to misleading interpretations as the LiₓFe_{1-y}M_{y}(PO₄)ᵤ(SO₄)ᵥ primary particles can form agglomerates within the suspension. However, the primary particle-size distribution of the material according to the invention can be directly determined as follows for such compositions using SEM photographs:
A small quantity of the powder sample is suspended in acetone and dispersed with ultrasound for 10 minutes. Immediately thereafter, a few drops of the suspension are dropped onto a sample plate of a scanning electron microscope (SEM). The solids concentration of the suspension and the number of drops are measured so that a large single-ply layer of powder particles forms on the support in order to prevent the powder particles from obscuring one another. The drops must be added rapidly before the particles can separate by size as a result of sedimentation. After drying in air, the sample is placed in the measuring chamber of the SEM. In the present example, this is a LEO 1530 apparatus which is operated with a field emission electrode at 1.5 kV excitation voltage and a 4 mm space between samples. At least 20 random sectional magnifications of the sample with a magnification factor of 20,000 are photographed. These are each printed on a DIN A4 sheet together with the inserted magnification scale. On each of the at least 20 sheets, if possible at least 10 free visible particles of the material according to the invention, from which the powder particles are formed together with the carbon-containing material, are randomly selected, wherein the boundaries of the particles of the material according to the invention are defined by the absence of fixed, direct connecting bridges. On the other hand, bridges formed by carbon material are included in the particle boundary. Of each of these selected particles, those with the longest and shortest axis in the projection are measured in each case with a ruler and converted to the actual particle dimensions using the scale ratio. For each measured LiₓFe_{1-y}M_{y}(PO₄)ᵤ(SO₄)ᵥ particle, the arithmetic mean from the longest and the shortest axis is defined as particle diameter. The measured LiₓFe_{1-y}M_{y}(PO₄)ᵤ(SO₄)ᵥ particles are then divided analogously to the light-scattering method into size classes. The differential particle-size distribution relative to the number of particles is obtained by plotting the number of the associated particles in each case against the size class. The cumulative particle-size distribution from which D₁₀, D₅₀ and D₉₀ can be read directly on the size axis is obtained by continually totalling the particle numbers from the small to the large particle classes.

The described process was also applied to battery electrodes containing the material according to the invention. In this case, however, instead of a powder sample a fresh cut or fracture surface of the electrode is secured to the sample holder and examined under a SEM.

### Comparative Example 1:

### Synthesis of Li_{0.80}Fe_{0.90}Zn_{0.10}PO₄

When producing the material it is to be borne in mind that the material is precipitated from an aqueous Fe²⁺ precursor solution. The reaction and drying/sintering is therefore preferably to be carried out under protective gas or vacuum in order to avoid a partial oxidation of Fe²⁺ to Fe³⁺ with formation of by-products such as Fe₂O₃ or FePO₄.

### Production and precipitation/suspension of a precursor mixture

First, 52.7g lithium hydroxide LiOH · H₂O was dissolved in 0.9 1 distilled water. This solution is called basic solution.

78.2 g FeSO₄ x 7 H₂O, and 12.1 g ZnSO₄ x 7 H₂O were dissolved in approx. 1.5 1 distilled water and 51.7 g 80-% phosphoric acid added slowly accompanied by stirring. 0.4 1 distilled wash water was added. This solution is termed acid solution.

The basic solution was introduced into the laboratory autoclave (capacity: 4 litres) at 600 rpm stirrer speed, the autoclave loaded with approx. 6 - 7 bar nitrogen via the dipping tube and relieved again via the vent valve. The procedure was repeated three times.

A disperser (IKA, ULTRATURRAX® UTL 25 Basic Inline with dispersion chamber DK 25.11) was connected to the autoclave between vent valve and bottom outlet valve in order to carry out the dispersion or grinding treatment. The pumping direction of the disperser was bottom outlet valve - disperser - vent valve. The disperser was started on the middle power level (13,500 rpm) according to the manufacturer's instructions.

The prepared acid solution was then pumped with a membrane pump via the dipping tube into the autoclave (stroke 100%, 180 strokes/minute; corresponds to the maximum capacity of the pump) and reflushed with approx. 500 to 600 ml distilled water. The pumping-in lasted for approx. 20 minutes, wherein the temperature of the resultant suspension increased to approx. 40°C. After pumping-in of the acid solution, a deposit precipitated out.

The disperser, which was started before the addition of the acid solution, was used for a total of approx. 1 hour for intensive mixing or grinding of the resultant, viscous suspension (after pumping-in of the acid solution at 50°C).

The use of a disperser brings an intensive mixing and the agglomeration of the precipitated viscous pre-mixture. During the precipitation and crystallization of the suspension, a homogeneous mixture of many small, approximately equally-sized crystal nuclei formed in the disperser as a result of the pre-grinding or intensive mixing. These crystal nuclei crystallized during the subsequent hydrothermal treatment (see below) to very uniformly grown crystals of the end-product with a very narrow particle-size distribution. The power and energy input via the dispersion treatment was respectively more than 7 kW/m³ and more than 7 kWh/m³ of the treated precursor mixture/suspension.

### Hydrothermal treatment

Each freshly produced suspension was subjected to hydrothermal treatment in the laboratory autoclave. Before heating the suspension, the autoclave was flushed with nitrogen in order to expel any air present from the autoclave before the hydrothermal process. The product according to the invention formed starting from hydrothermal temperatures of approximately 100 to 120°C. The hydrothermal treatment was preferably carried out for 2 hours at 130°C.

After switching off and disconnecting the disperser the mixture was heated over 1.5 hours to 130°C, for 2 hours. Cooling to 30°C then took place over 3 hours.

*Li_{0.80}Fe_{0.90}Zn_{0.10}PO₄* was then dried in air or in the drying oven for example at mild temperatures (40°C) without visible oxidation. The atomic ratio Li/Σ_{Fe + M} was 0.80 indicating a lithium deficiency.

The thus-obtained material was pumped under nitrogen atmosphere through the bottom outlet valve of the autoclave into a pressure filter (Seitz filter). The membrane pump setting was such that a pressure of 5 bar was not exceeded. The filter cake was subsequently washed with distilled water until the conductivity of the wash water had fallen below 42 µS/cm.

### Comparative Example 2:

### Synthesis of Li_{0.78}Fe_{0.90}Mg_{0.10}PO₄

The synthesis was carried out as in Example 1, except that 10.4 g MgSO₄*7 H₂O was used as starting material in the corresponding molar weight quantities instead of ZnSO₄. The atomic ratio Li/Σ_{Fe + M} was 0.87 indicating a lithium deficiency.

### Example 1

### Synthesis of Li_{0.99}Fe_{0.90}Zn_{0.10}PO₄(SO₄)_{0.006}

First, 52.7g lithium hydroxide LiOH · H₂O was dissolved in 0.9 1 distilled water. This solution is called basic solution.

78.2 g FeSO₄ x 7 H₂O, 150 g Li₂SO₄.H₂O and 12.1 g ZnSO₄ x 7 H₂O were dissolved in approx. 1.5 1 distilled water and 51.7 g 80-% phosphoric acid added slowly accompanied by stirring. 0.4 1 distilled wash water was added.

The atomic ratio Li/Σ_{Fe + M} measured by ICP was 0.99 indicating no lithium deficiency.

### Example 2:

### Synthesis of Li_{0.98}Fe_{0.90}Mg_{0.10}PO₄(SO₄)_{0.006}

The synthesis was carried out as in Example 1, except that 10.4 g MgSO₄*7 H₂O was used as starting material instead of ZnSO₄. The atomic ratio Li/Σ_{Fe + M} measured was 0.98 indicating quasi no lithium deficiency.

### Example 3

The following materials (with the atomic ratio Li/Σ_{Fe + M} determined by ICP-OES measurements (Varian Vista Pro 720 ES)were synthesized according to examples 1 and 2 but varying the amounts of the added lithium sulfate before precipitation.

### 1. Zinc doping

LiₓFe_{0.93}Zn_{0.07}PO₄(SO₄)_{0.01} ((atomic ratio Li/Σ_{Fe + M}: 0.981);
LiₓFe_{0.95}Zn_{0.05}PO₄ (SO₄)_{0.01} (atomic ratio Li/Σ_{Fe + M}: 0.984);
LiₓFe_{0.97}Zn_{0.03}PO4(SO₄)_{0.01} (atomic ratio Li/Σ_{Fe + M}: 0.992);
LiₓFe_{0.93}Zn_{0.07}PO₄(SO₄)_{0.006} (atomic ratio Li/Σ_{Fe + M}: 0.945);
LiₓFe_{0.95}Zn_{0.05}PO₄(SO₄)_{0.006} (atomic ratio Li/Σ_{Fe + M}: 0.961);
LiₓFe_{0.97}Zn_{0.03}PO₄(SO₄)_{0.006} (atomic ratio Li/Σ_{Fe+M}: 0.952)

### 2. Magnesium doping

LiₓFe_{0.93}Mg_{0.07}PO₄(SO₄)_{0.01} ((atomic ratio Li/Σ_{Fe + M}: 0.981);
LiₓFe_{0.95}Mg_{0.05}PO₄(SO₄)_{0.01} (atomic ratio Li/Σ_{Fe + M}: 0.983);
LiₓFe_{0.97}Mg_{0.03}PO₄(SO₄)_{0.01} (atomic ratio Li/Σ_{Fe + M}: 0.986);
LiₓFe_{0.93}Mg_{0.07}PO₄(SO₄)_{0.006} (atomic ratio Li/Σ_{Fe + M}: 0.958);
LiₓFe_{0.95}Mg_{0.05}PO₄(SO₄)_{0.006} (atomic ratio Li/Σ_{Fe + M}: 0.946);
LiₓFe_{0.97}Mg_{0.03}PO₄(SO₄)_{0.006} (atomic ratio Li/Σ_{Fe + M}: 0.955)

### Example 4:

### Carbon coating of the obtained materials (variant 1)

The filter cakes obtained in Examples 1 to 3(as well as of the comparative examples) were impregnated with a solution of 24 g lactose in water and then calcined at 750°C for 3 hours under nitrogen.

Depending on the quantity of lactose, the proportion of carbon in the product according to the invention was between 0.2 and 4 wt.-%.

Typically 1 kg dry product from the examples and comparative examples was mixed intimately with 112 g lactose monohydrate and 330 g deionized water and dried overnight in a vacuum drying oven at 105°C and < 100 mbar to a residual moisture of 3%. The brittle drying product was broken by hand and coarse-ground in a disk mill (Fritsch Pulverisette 13) with a 1 mm space between disks and transferred in high-grade steel cups into a protective gas chamber furnace (Linn KS 80-S). The latter was heated to 750°C within 3 hours at a nitrogen stream of 200 l/h, kept at this temperature for 3 hours and cooled over 3 hours to room temperature. The carbon-containing product was disagglomerated in a jet mill (Hosokawa).

The SEM analysis of the particle-size distribution produced the following values: D₅₀ < 0.5 µm, difference between D₉₀ and D₁₀ value: < 1 µm.

### Example 5:

### Carbon coating of the obtained materials (variant 2)

The synthesis of the materials according to the invention was carried out as described in the comparative examples and in the examples, except that gelatine was also then added (9 g gelatine per 100 g starting product) during the precipitation step a). The end-product contained approx. 2.3 wt.-% carbon.

### Example 6: Manufacture of electrodes

Thin-film electrodes as disclosed for example in Anderson et al., Electrochem. and Solid State Letters 3 (2) 2000, pages 66-68 were produced. The electrode compositions usually consisted of 90 parts by weight active material, 5 parts by weight Super P carbon (Timcal) as conductive additive and 5-% polyvinylidene fluoride (Solvay) as binder.

The active material was mixed, together with the binder (or, for the electrodes of the state of the art, with the added conductive agent), in N-methylpyrrolidone, applied to a pretreated (primer) aluminium foil by means of a doctor blade and the N-methylpyrrolidone was evaporated at 105°C under vacuum. The electrodes were then cut out (13 mm diameter) and roll-coated with a roller at room temperature. The starting nip width was e.g. 0.1 mm and the desired electrode thickness progressively adjusted in steps of 5-10 µm. 4 rolled coats were applied at each step and the foil was rotated by 180°. After this treatment, the thickness of the coating was between 20-25µm. The primer on the aluminium foil consisted of a thin carbon coating which improves the adhesion of the cathode film on the aluminium foil.

The electrodes were then dried overnight at 120°C under vacuum. Half cells were assembled in an argon-filled glovebox and were subsequently electrochemically measured.
The electrochemical measurements were carried out against lithium metal and using LP30 (Merck, Darmstadt) as electrolyte (EC (ethylene carbonate):DMC (dimethylcarbonate) = 1:1, 1 M LiPF₆).

The charge procedure was carried out in CCCV mode, i.e. cycles with a constant current at the C/10 rate followed by a constant voltage portion at the voltage limits (4.1 volt versus Li/Li⁺) until the current fell approximately to the C/100 rate, in order to complete the charge.

Corresponding measurements of the specific capacity and the current carrying capacity were carried out on the materials according to the invention doped with magnesium and zinc.

Figure 1 shows the discharge curves at C/10 and at room temperature for a half cell containing Li_{0.80}Fe_{0.90}Zn_{0.10}PO₄ (Comparative Example 1) in the positive electrode. The ratio Li/Σ_{Fe + Mn + M} was 0.80 which is an indicator for Li deficiency.

Figure 2 shows the discharge curves at C/10 and at room temperature for a half cell containing Li_{0.78}Fe_{0.90}Mg_{0.10}PO₄ (Comparative Example 2) in the positive electrode. The ratio Li/Σ_{Fe + Mn + M} was 0. 78 which is an indicator for Li deficiency.

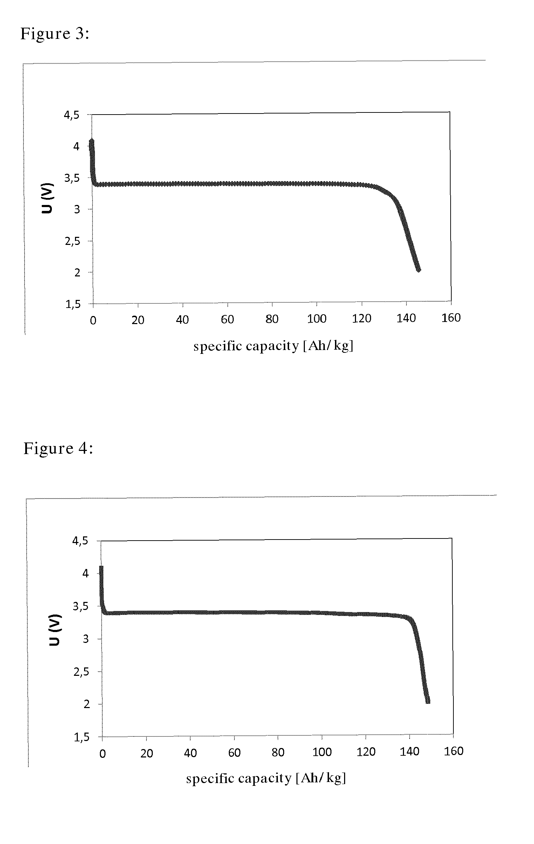

Figure 3 shows the discharge curves at C/10 and at room temperature for an electrode containing Li_{0.99}Fe_{0.90}Zn_{0.10}PO₄(SO₄)_{0.006} (Example 1) in the positive electrode.

Figure 4 the discharge curves at C/10 and at room temperature for an electrode containing Li_{0.98}Mn_{0.56}Fe_{0.33}Zn_{0.10}PO₄(SO₄)_{0.01} (Example 2) in the positive electrode.

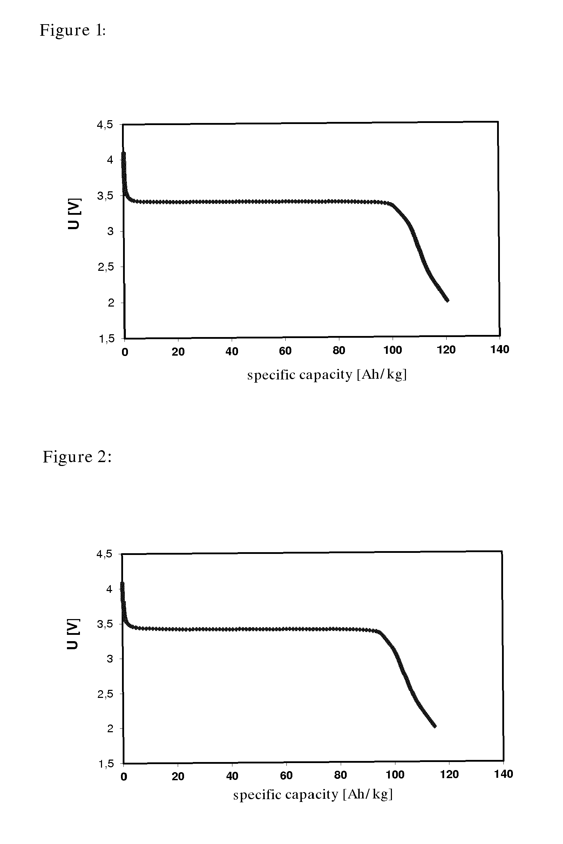

Compared to the samples shown in Figure 1 and 2 the specific capacity is remarkably increased. Both samples show basically no Li deficiency (Example 1 and Example 2 both have a Li/Σ_{Fe + Mn + M} ratio of 0.99.

## Claims

1. Mixed lithium-iron-metal phosphate of formula
LiₓFe_{1-y}M_{y}(PO₄)ᵤ(SO₄)ᵥ
wherein
M is a metal selected from the group consisting of Co, Ni, Mn, Al, Mg, Sn, Pb, Nb ,B, Cu, Cr, Mo, Ru, V, Ga, Ca, Sr, Ba, Ti, Zr, Cd and mixtures thereof
and wherein:
0.9 ≤ x ≤ 1.5, 0 ≤ y ≤ 0.5, 0 < u ≤ 1.0 and
0 < v ≤ 0.25.

2. Mixed lithium-iron-metal phosphate according to claim 1, wherein M is selected from Co, Mn, Mg, Nb, Ni, Al, Zn, Ca and mixtures thereof.

3. Mixed lithium-iron metal phosphate according to claim 2, wherein M is Zn or Mg or mixtures thereof.

4. Mixed lithium-iron metal phosphate according to one of claims 1 to 3, wherein the atomic ratio Li/Σ_{Fe + M} is in the range of 0.9 to 1.5.

5. Mixed lithium-iron metal phosphate according to one of the previous claims additionally comprising carbon.

6. Mixed lithium-iron metal phosphate according to claim 5, wherein carbon is evenly distributed throughout the mixed lithium-iron metal phosphate and/or the individual particles of the mixed lithium-iron metal phosphate are partially or entirely coated with carbon.

7. Mixed lithium-iron metal phosphate according to one of claims 5 to 7, wherein the amount of carbon relative to the mixed lithium-iron metal phosphate is ≤ 4 wt.-%.

8. Cathode for a secondary lithium-ion battery containing a lithium-iron metal phosphate according to one of claims 1 to 7.

9. Cathode according to claim 8, which is free of added conductive agents.

10. Process for producing a mixed lithium-iron phosphate according to one of the previous claims 1 to 7, comprising the following steps:
a. providing an aqueous mixture with a pH < 7,5 containing at least one Li starting compound, a Fe starting compound, optionally a M starting compound, a PO₄³⁻ and a SO₄²⁻ starting compound until a precipitate or suspension forms,
b. carrying out a dispersion or grinding treatment of the mixture and/or the suspension.
c. Obtaining the mixed lithium-iron phosphate from the suspension by reaction of the suspension under hydrothermal conditions.

11. Process according to claim 10, wherein in step a) or step c) a further, carbon-containing component is added.

12. Process according to claim 10, wherein the mixed lithium-iron metal phosphate obtained in step c) is mixed with a carbon-containing component.

13. Process according to anyone of claims 10 to 12, wherein two different Li sources are used.

14. Process according to claim 13, wherein one Li source is Li₂SO₄.

15. Mixed lithium-iron metal phosphate obtainable by a process according to one of claims 10 to 14.
